# FASCICULE DE BREVET EUROPEEN

(11) **EP 2 643 555 B1**
(45) Date de publication et mention de la délivrance du brevet: **07.01.2015**
(21) Numéro de dépôt: 11802485.0
(22) Date de dépôt: 21.11.2011
(51) Int. Cl.: F01D 5/22

(54) **Aube mobile de turbomachine et turbomachine associée**
Laufschaufel einer Turbomaschine und zugehörige Turbomaschine
Turbomachine rotor blade and corresponding turbomachine

(30) Priorité: 22.11.2010 FR 1059573
(43) Date de publication de la demande: 02.10.2013
(73) Titulaire: Snecma, 75015 Paris (FR)
(72) Inventeur: COLLIN, Yannick, F-94100 Saint Maur des Fosses (FR); LARDELLIER, Thomas, F-75003 Paris (FR); MATHIEU, David, F-77500 Chelles (FR); TRAHOT, Denis, F-95220 Herblay (FR); REMY, Christophe, B-4470 St Georges (BE); GODFRIND, Xavier, B-1340 Ottignies (BE)
(74) Mandataire: Besnard, Christophe Laurent
(86) Numéro de dépôt international: PCT/FR2011/052709
(87) Numéro de publication internationale: WO 2012/069744

(56) Documents cités:
- EP-A2- 1 890 008
- FR-A1- 2 923 524
- GB-A- 2 451 568
- US-B2- 7 762 779

## Description

### DOMAINE DE L'INVENTION

Le présent exposé concerne une aube mobile de turbomachine.

Une telle aube peut équiper tout type de turbomachine, terrestre ou aéronautique, et notamment un turbomoteur d'hélicoptère ou un turboréacteur d'avion.

### ETAT DE LA TECHNIQUE ANTERIEURE

Dans le présent exposé, l'amont et l'aval sont définis par rapport au sens d'écoulement normal du gaz (de l'amont vers l'aval) à travers la turbomachine.

On appelle axe de la turbomachine ou axe moteur, l'axe de rotation du rotor de la turbomachine. La direction axiale correspond à la direction de l'axe de la turbomachine et une direction radiale est une direction perpendiculaire à l'axe de la turbomachine et coupant cet axe. De même, un plan axial est un plan contenant l'axe de la turbomachine, et un plan radial est un plan perpendiculaire à cet axe.

Sauf précision contraire, les adjectifs intérieur et extérieur sont utilisés en référence à une direction radiale de sorte que la partie intérieure d'un élément est, suivant une direction radiale, plus proche de l'axe de la turbomachine que la partie extérieure du même élément.

Enfin, l'axe d'empilement d'une aube se définit comme l'axe passant par le centre de gravité de la section la plus basse de la pale (i.e. la plus proche de l'axe de la turbomachine) et perpendiculaire à l'axe de la turbomachine.

Typiquement, une aube mobile de turbomachine comprend une pale s'étendant suivant l'axe d'empilement de l'aube, entre les extrémités proximale et distale (i.e. intérieure et extérieure) de l'aube. A son extrémité proximale, l'aube comprend un pied par lequel elle est fixée à un disque du rotor de la turbomachine. A son extrémité distale, ou extrémité libre, l'aube peut comprendre un élément transversal, appelé talon. Lorsque plusieurs aubes mobiles sont fixées sur un disque de rotor, leurs talons sont disposés bord à bord de manière à former une couronne circonférentielle qui a, notamment, pour fonction de délimiter extérieurement la veine d'écoulement du gaz traversant la turbomachine et de limiter ainsi les fuites de gaz à cet endroit.

Le présent exposé concerne une aube mobile à talon, ce talon comprenant: une plateforme délimitant la surface extérieure de la veine de gaz traversant la turbomachine, et présentant des premier et deuxième bords latéraux opposés; et des léchettes d'étanchéité amont et aval s'étendant radialement vers l'extérieur à partir de ladite plateforme.

En outre, cette aube mobile est telle que chacun des premier et deuxième bords latéraux de la plateforme présente, entre les léchettes amont et aval, un profil sensiblement en "Z" avec une première portion proche de la léchette amont, une deuxième portion intermédiaire et une troisième portion proche de la léchette aval, les première et troisième portions étant sensiblement parallèles entre elles et la deuxième portion s'étendant sensiblement obliquement entre les première et troisième portions.

Dans le but d'amortir les vibrations auxquelles les aubes du type précité sont soumises en fonctionnement, les aubes sont montées sur leur disque de rotor avec une contrainte de torsion autour de leur axe d'empilement. Ainsi, les plateformes des talons sont dessinées pour que chaque aube soit mise en contrainte de torsion par appui avec ses voisines, principalement le long desdites deuxièmes portions des bords latéraux.

Pour améliorer l'appui des aubes entre elles et, notamment, éviter le chevauchement des talons et transmettre le mieux possible les efforts d'une aube sur ses voisines, il est connu d'augmenter la hauteur, i.e. la dimension suivant une direction radiale, des bords latéraux de la plateforme en particulier au niveau desdites deuxièmes portions.

Selon un premier exemple connu de talon d'aube mobile, la partie centrale de la plateforme, s'étendant entre les léchettes amont et aval, est formée de deux sous-parties d'épaisseurs différentes: une première sous-partie en surépaisseur s'étendant, axialement, depuis la léchette amont jusqu'au niveau des troisièmes portions des bords latéraux et, circonférentiellement, depuis le premier bord latéral jusqu'au deuxième bord latéral, et une deuxième sous-partie d'épaisseur réduite s'étendant, axialement, après la première sous-partie jusqu'à la léchette aval et, circonférentiellement, depuis le premier bord latéral jusqu'au deuxième bord latéral. Cet exemple de talon a pour principal inconvénient d'être lourd en raison de la première sous-partie en surépaisseur, cette sous-partie étant "pleine", i.e. n'étant pas évidée.

Pour palier cet inconvénient, un deuxième exemple connu de talon comprend à la place de ladite première sous-partie, deux rebords faisant saillie par rapport à la face extérieure de la plateforme et situés le long des bords latéraux de la plateforme. Comme ladite première sous-partie de la plateforme, ces rebords s'étendent depuis la léchette amont jusqu'au niveau des troisièmes portions des bords latéraux, i.e. ils ne rejoignent pas la léchette aval. Cependant, selon la direction circonférentielle, ces rebords sont séparés par une cavité. C'est cette cavité qui permet d'alléger le talon.

Ce deuxième exemple connu de talon n'est toutefois pas exempt d'inconvénients. Notamment, un inconvénient tient au fait que le centre de gravité du talon n'est pas aligné avec le centre de gravité de la coupe de tête, la "coupe de tête" désignant la section de pale immédiatement sous le talon. Cette absence d'alignement est la cause de surcontraintes exercées par le talon sur le reste de l'aube, ces surcontraintes étant néfastes à la durée de vie de l'aube. On notera que le premier exemple connu de talon, précédemment décrit, présente également cet inconvénient.

Un autre exemple de talon est décrit dans le document de brevet FR 2 923 524.

### PRESENTATION DE L'INVENTION

Le présent exposé a pour objet une aube mobile de turbomachine, présentant à son extrémité distale un talon comprenant: une plateforme délimitant la surface extérieure de la veine de gaz traversant la turbomachine, et présentant des premier et deuxième bords latéraux opposés, et des léchettes d'étanchéité amont et aval s'étendant radialement vers l'extérieur à partir de ladite plateforme. Chacun des premier et deuxième bords latéraux présente, entre les léchettes amont et aval, un profil sensiblement en "Z" avec une première portion proche de la léchette amont, une deuxième portion intermédiaire et une troisième portion proche de la léchette aval, les première et troisième portions étant sensiblement parallèles entre elles et la deuxième portion s'étendant obliquement entre les première et troisième portions. Le talon comprend, du côté du premier bord latéral, un premier rebord en saillie vers l'extérieur s'étendant le long de la deuxième portion du premier bord latéral, ce premier rebord n'étant raccordé à aucune des léchettes amont et aval, et le talon comprend, du côté du deuxième bord latéral, un deuxième rebord en saillie vers l'extérieur comprenant une partie aval raccordée à la léchette aval et s'étendant le long des deuxième et troisième portions du deuxième bord latéral, et une partie amont prolongeant la partie aval jusqu'à la léchette amont, en retrait par rapport à la première portion du deuxième bord latéral (i.e. par rapport à la première portion du deuxième bord latéral, la partie amont est décalée vers le milieu de la plateforme).

Dans certains modes de réalisation, la hauteur de la partie amont du deuxième rebord est inférieure à celle de la partie aval.

Le talon d'une telle aube a pour avantage de présenter un poids limité, comparativement au premier exemple connu de talon précédemment décrit.

De plus, le positionnement et la configuration des rebords permet de réaliser un talon dont le centre de gravité est proche de, voire aligné avec le centre de gravité de la coupe de tête. Ceci permet de limiter, voire d'éviter, les surcontraintes exercées par le talon sur le reste de l'aube.

Enfin, comparativement aux exemples connus de talon précités, le deuxième rebord étant raccordé à la léchette aval, la léchette aval est rigidifiée ce qui permet de mieux supporter les efforts de contact entre talons adjacents.

Selon un mode de réalisation, le matériau constituant l'aube est généralement peu résistant à l'usure dans les conditions de fonctionnement de la turbomachine et, pour prolonger la durée de vie de l'aube, on protège les parties sensibles de l'aube en appliquant sur celles-ci un autre matériau plus résistant à l'usure, appelé communément matériau anti-usure.

Ainsi, selon un mode de réalisation, le premier et le deuxième rebord portent chacun sur leur face latérale, une couche de matériau anti-usure.

Cette couche de matériau anti-usure permet de protéger les rebords du talon de l'aube contre l'usure résultant des frottements avec les aubes voisines. Les parties des rebords situées au niveau desdites deuxièmes portions des bords latéraux de l'aube, étant les parties les plus exposées aux frottements, il est intéressant de les protéger en priorité. Aussi, selon un mode de réalisation, ladite couche de matériau anti-usure est présente au moins au niveau desdites deuxièmes portions.

Ladite couche de matériau anti-usure peut être réalisée de différentes manières. Il peut s'agir de plaquettes d'alliage spécifique présentant une dureté élevée, que l'on vient braser sur le rebord métallique, i.e. le substrat, au niveau des surfaces d'appui avec les aubes voisines. Selon une autre technique, on procède par chargement progressif de la surface à protéger avec un matériau anti-usure que l'on met en fusion en même temps que la couche supérieure du substrat (éventuellement après avoir enlevé localement par meulage, sur une profondeur déterminée, la matière du substrat). On apporte la chaleur nécessaire au moyen d'une source appropriée. Celle-ci peut être produite, par exemple, par un arc électrique gainé de gaz neutre ou bien par un faisceau laser. Selon cette autre technique, on utilise comme matériau anti-usure des alliages à base de cobalt dont certains sont commercialisés sous la marque "Stellite".

Le présent exposé a également pour objet une turbomachine comprenant une aube selon l'une quelconque des revendications précédentes.

### BREVE DESCRIPTION DES DESSINS

Les dessins annexés sont schématiques et ne sont pas nécessairement à l'échelle, ils visent avant tout à illustrer les principes de l'invention.

Sur ces dessins, d'une figure (FIG) à l'autre, des éléments (ou parties d'élément) identiques sont repérés par les mêmes signes de référence.
La FIG 1 représente, en perspective, un exemple d'aube mobile à talon.
La FIG 2 est une vue de détail du talon de l'aube de la FIG 1.
La FIG 3 est une vue de dessus du talon de la FIG 2.

### DESCRIPTION DETAILLEE D'EXEMPLE(S) DE REALISATION

Un exemple de réalisation d'une aube mobile à talon est décrit en détail ci-après, en référence aux dessins annexés. Cet exemple illustre les caractéristiques et les avantages de l'invention. Il est toutefois rappelé que l'invention ne se limite pas à cet exemple.

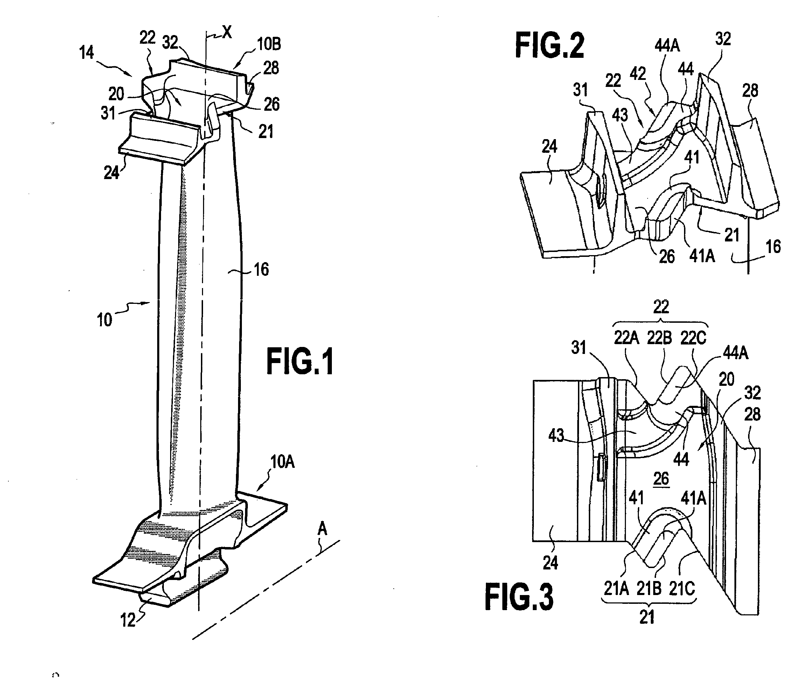

La FIG 1 représente un exemple d'aube mobile 10 de turbomachine. Une telle aube peut être utilisée dans un étage basse pression d'un turboréacteur d'avion.

L'aube mobile 10 comprend une pale 16 s'étendant suivant l'axe d'empilement X de l'aube, entre les extrémités proximale 10A et distale 10B (i.e. intérieure et extérieure) de l'aube. A son extrémité proximale 10A, l'aube comprend un pied 12 par lequel elle est fixée à un disque du rotor de la turbomachine (non représenté). Ce disque tourne autour de l'axe A de la turbomachine. A son extrémité distale 10B, l'aube 10 comprend un talon 14.

Lorsque plusieurs aubes mobiles 10 sont fixées sur un disque de rotor, leurs talons 14 sont disposés bord à bord de manière à former une couronne rotative délimitant une surface de révolution autour de l'axe A de rotation du disque. Cette couronne a, notamment, pour fonction de délimiter la surface extérieure de la veine d'écoulement du gaz circulant entre les pales 16 et de limiter ainsi les fuites de gaz au niveau de l'extrémité distale 10B des aubes 10.

Le talon 14 comprend: une plateforme 20 délimitant extérieurement la veine d'écoulement du gaz circulant entre les pales 16, et présentant des premier et deuxième bords latéraux 21, 22 opposés; et des léchettes d'étanchéité amont 31 et aval 32 s'étendant radialement vers l'extérieur à partir de la plateforme 20. Lorsque plusieurs aubes mobiles 10 sont fixées sur un disque de rotor, les léchettes amont ou aval des aubes sont disposées bord à bord de manière à former un anneau rotatif d'axe A, cet anneau étant contenu sensiblement dans un plan radial. Un tel anneau a, notamment, pour fonction de limiter le jeu existant entre les aubes 10 et l'enveloppe, ou carter, qui entoure celles-ci, afin de limiter les fuites de gaz à cet endroit.

La plateforme 20 présente une partie amont 24, communément appelée "becquet amont", s'étendant en amont de la léchette amont 31. La plateforme 20 présente également une partie aval 28, communément appelée "becquet aval", s'étendant en aval de la léchette aval 32. Enfin, la plateforme présente une partie centrale 26 s'étendant entre les léchettes amont 31 et aval 32.

Comme le montre bien la FIG 3, dans la partie centrale 26, chacun des premier et deuxième bords latéraux 21 (22) de la plateforme 20 présente, un profil sensiblement en "Z" avec une première portion 21A (22A) proche de la léchette amont 31, une deuxième portion 21B (22B) intermédiaire et une troisième portion 21C (22C) proche de la léchette aval 32, les première et troisième portions 21A, 21C (22A, 22C) du bord 21 (22) étant sensiblement parallèles entre elles, et la deuxième portion 21B (22B) s'étendant sensiblement obliquement entre les première et troisième portions 21A, 21C (22A, 22C).

Dans le but d'amortir les vibrations auxquelles les aubes 10 sont soumises en fonctionnement, les aubes 10 sont montées sur leur disque de rotor (non représenté) avec une contrainte de torsion autour de leur axe d'empilement X. Ainsi, les plateformes 20 des talons 14 sont dessinées pour que chaque aube 10 soit mise en contrainte de torsion par appui avec ses voisines, principalement le long des deuxièmes portions 21B, 22B des bords latéraux 21, 22.

Le talon 14 de l'aube 10 comprend, du côté du premier bord latéral 21, un premier rebord 41 en saillie vers l'extérieur, qui s'étend le long de la deuxième portion 21B du premier bord latéral 21. Ce premier rebord 41 n'est ni raccordé à la léchettes amont 31, ni à la léchette aval 32.

Dans l'exemple, le premier rebord 41 s'étend essentiellement le long de la deuxième portion 21B. Plus précisément, il ne s'étend pas le long de la troisième portion 21C du premier bord latéral 21 et ne s'étend que partiellement le long de la première portion 21A.

Dans l'exemple, le premier rebord 41 présente sur sa face latérale, le long de la deuxième portion 21B, une couche de matériau anti-usure 41A obtenue par chargement de cette face latérale avec un alliage de base cobalt du type de ceux commercialisés sous la marque "Stellite", présentant de bonnes propriétés anti-usure.

Le talon 14 comprend, en outre, du côté du deuxième bord latéral 22, un deuxième rebord 42 en saillie vers l'extérieur comprenant une partie aval 44 raccordée à la léchette aval 32 et s'étendant le long des deuxième 22B et troisième 22C portions du deuxième bord latéral 22. A l'image du premier rebord 41, cette partie aval 44 présente sur sa face latérale, le long de la deuxième portion 22B, une couche de matériau anti-usure 44A obtenue par chargement de cette face latérale avec un alliage de base cobalt présentant de bonnes propriétés anti-usure. On notera qu'à la différence du premier rebord 41, la partie aval 44 est raccordée à une léchette, en l'occurrence la léchette aval 32.

Le deuxième rebord 42 comprend, de plus, une partie amont 43 prolongeant la partie aval 44 jusqu'à la léchette amont 31, et se situant en retrait par rapport à la première portion 22A du deuxième bord latéral 22. En d'autres termes, la partie amont 43 ne longe pas la première portion 22A du deuxième bord latéral 22 mais, au contraire, elle est en retrait par rapport à cette première portion 22A en ce sens que la partie amont 43 est plus proche du milieu de la plateforme 26. Dans l'exemple, la partie amont 43 s'entend d'abord dans le prolongement de la partie aval 44 de sorte qu'elle s'éloigne d'abord progressivement de la première portion 22A. Par rapport à la première portion 22A, la partie amont 43 se décale donc d'abord progressivement en direction du milieu de la plateforme 26. Ensuite, la partie amont 43 se courbe en se rapprochant légèrement de la première portion 22A, tout en restant nettement en retrait (i.e. en décalage) par rapport à cette première portion 22A.

Dans l'exemple, la partie amont 43 s'entend d'abord dans le prolongement de la partie aval 44, i.e. suivant la direction de la deuxième portion 22B, puis elle se courbe de manière à venir se raccorder sensiblement orthogonalement à la léchette amont 31. La partie amont 43 définit ainsi une convexité orientée vers le premier rebord 41.

Comme le montre bien la FIG 2, la partie amont 43 est de hauteur inférieure à la partie aval 44, de sorte qu'il existe une sorte de contremarche entre ces parties 43, 44.

Dans l'exemple, le premier et le deuxième rebord 41, 42 sont sensiblement de même largeur, les parties amont 43 et aval 44 du deuxième rebord 42 étant également sensiblement de même largeur. En outre, le premier rebord 41 et la partie aval 44 du deuxième rebord 42 sont sensiblement de même hauteur.

Comme représenté, le premier rebord 41, le deuxième rebord 42, la léchette amont 31 et la léchette aval 32 définissent entre eux une cavité, communément appelée baignoire, dont le fond, sensiblement plat, est formé par la surface extérieure de la partie centrale 26 de la plateforme 20.

## Revendications

1. Aube mobile de turbomachine, présentant à son extrémité distale (10B) un talon (14) comprenant:
une plateforme (20) délimitant la surface extérieure de la veine de gaz traversant la turbomachine, et présentant des premier et deuxième bords latéraux (21, 22) opposés, et
des léchettes d'étanchéité amont et aval (31, 32) s'étendant radialement vers l'extérieur à partir de ladite plateforme (20),
dans laquelle chacun des premier et deuxième bords latéraux (21, 22) présente, entre les léchettes amont et aval (31, 32), un profil sensiblement en "Z" avec une première portion (21A; 22A) proche de la léchette amont (31), une deuxième portion (21B; 22B) intermédiaire et une troisième portion (21C; 22C) proche de la léchette aval (32), les première et troisième portions (21A, 21C; 22A, 22C) étant sensiblement parallèles entre elles et la deuxième portion (21B; 22B) s'étendant obliquement entre les première et troisième portions,
dans laquelle le talon (14) comprend, du côté du premier bord latéral (21), un premier rebord (41) en saillie vers l'extérieur, qui s'étend le long de la deuxième portion (21B) du premier bord latéral (21), et
dans laquelle le talon (14) comprend, du côté du deuxième bord latéral (22), un deuxième rebord (42) en saillie vers l'extérieur, ce deuxième rebord (42) comprenant une partie aval (44) raccordée à la léchette aval (32) et qui s'étend le long des deuxième et troisième portions (22A, 22C) du deuxième bord latéral (22), et une partie amont (43) prolongeant la partie aval (44) jusqu'à la léchette amont (31),
cette aube (10) étant **caractérisée en ce que** le premier rebord (41) n'est raccordé à aucune des léchettes amont et aval (31, 32) et **en ce que** la partie amont (43) du deuxième rebord (42) le situe en retrait par rapport à la première portion (22A) du deuxième bord latéral (22).

2. Aube selon la revendication 1, dans laquelle le premier et le deuxième rebord (41, 42) portent chacun sur leur face latérale une couche de matériau anti-usure (41A, 44A).

3. Aube selon la revendication 1 ou 2, dans laquelle la hauteur de la partie amont (43) du deuxième rebord (42) est inférieure à celle de la partie aval (44).

4. Turbomachine comprenant une aube (10) selon l'une quelconque des revendications précédentes.

## Patentansprüche

1. Laufschaufel einer Turbomaschine, die an ihrem distalen Ende (10B) ein Deckband (14) aufweist, das umfasst:
eine Plattform (20), die die Außenfläche des Kanals des die Turbomaschine durchströmenden Gases begrenzt und gegenüberliegende erste und zweite Seitenkanten (21, 22) aufweist,
eine stromaufwärtige und eine stromabwärtige Dichtungszunge (31, 32), die ausgehend von der Plattform (20) radial nach außen verlaufen,
wobei eine jede der ersten und zweiten Seitenkanten (21, 22) zwischen der stromaufwärtigen und der stromabwärtigen Zunge (31, 32) ein im Wesentlichen "Z"-förmiges Profil aufweist, mit einem ersten Abschnitt (21 A; 22A) nahe der stromaufwärtigen Zunge (31), einem zweiten Zwischenabschnitt (21 B; 22B) und einem dritten Abschnitt (21C; 22C) nahe der stromabwärtigen Zunge (32), wobei der erste und der dritte Abschnitt (21 A, 21C; 22A, 22C) im Wesentlichen parallel zueinander verlaufen und wobei der zweite Abschnitt (21 B; 22B) zwischen dem ersten und dem dritten Abschnitt schräg verläuft,
wobei das Deckband (14) auf der Seite der ersten Seitenkante (21) einen nach außen vorspringenden ersten Rand (41) umfasst, der sich entlang des zweiten Abschnitts (21 B) der ersten Seitenkante (21) erstreckt, und
wobei das Deckband (14) auf der Seite der zweiten Seitenkante (22) einen nach außen vorspringenden zweiten Rand (42) umfasst, wobei dieser zweite Rand (42) einen stromabwärtigen Teil (44) umfasst, der an die stromabwärtige Zunge (32) angeschlossen ist und der sich entlang des zweiten und des dritten Abschnitts (22A, 22C) der zweiten Seitenkante (22) erstreckt, und wobei ein stromaufwärtiger Teil (43) den stromabwärtigen Teil (44) bis zu der stromaufwärtigen Zunge (31) fortsetzt,
wobei diese Schaufel (10) **dadurch gekennzeichnet ist, dass** der erste Rand (41) an keine der stromauf- und stromabwärtigen Zungen (31, 32) angeschlossen ist und dass der stromaufwärtige Teil (43) des zweiten Randes (42) gegenüber dem ersten Abschnitt (22A) der zweiten Seitenkante (22) zurückspringend gelegen ist.

2. Schaufel nach Anspruch 1, wobei der erste und der zweite Rand (41, 42) jeweils auf ihrer Seitenfläche eine Schicht aus verschleißfestem Werkstoff (41A, 44A) tragen.

3. Schaufel nach Anspruch 1 oder 2, wobei die Höhe des stromaufwärtigen Teils (43) des zweiten Randes (42) geringer als diejenige des stromabwärtigen Teils (44) ist.

4. Turbomaschine, umfassend eine Schaufel (10) nach einem der vorhergehenden Ansprüche.

## Claims

1. A movable blade for a turbomachine, the blade having at its distal end (10B) a top portion (14) comprising:
• a platform (20) defining the outside surface of the passage for gas passing through the turbomachine, and having opposite first and second side edges (21, 22); and
· upstream and downstream sealing wipers (31, 32) extending radially outwards from said platform (20);
in which each of the first and second side edges (21, 22) has a substantially Z-shaped profile between the upstream and downstream wipers (31, 32), which profile has a first segment (21A; 22A) close to the upstream wiper (31), an intermediate second segment (21B; 22B), and a third segment (21C; 22C) close to the downstream wiper (32), the first and third segments (21A, 21C; 22A, 22C) being substantially parallel to each other, and the second segment (21B; 22B) extending obliquely between the first and third segments; wherein the top portion (14) includes, on the side of the first side edge (21), a first outwardly projecting rim (41) that extends along the second segment (21B) of the first side edge (21), and wherein the top portion (14) includes, on the side of the second side edge (22), a second outwardly projecting rim (42), the second rim (42) having a downstream portion (44) connected to the downstream wiper (32) and extending along the second and third segments (22A, 22C) of the second side edge (22), and an upstream portion (43) extending the downstream portion (44) as far as the upstream wiper (31),
the blade (10) being **characterized by**:
the first rim (41) not being connected to either of the upstream and downstream wipers (31, 32); and by the upstream portion (43) of the second rim (42)
being set back relative to the first segment (22A) of the second side edge (22).

2. A blade according to claim 1, wherein each of the first and second rims (41, 42) carries a layer of antiwear material (41A, 44A) on its side face.

3. A blade according to claim 1 or claim 2, wherein the height of the upstream portion (43) of the second rim (42) is less than the height of the downstream portion (44).

4. A turbomachine including a blade (10) according to any preceding claim.
